# EUROPÄISCHE PATENTANMELDUNG

(11) **EP 0 936 187 A2**
(43) Veröffentlichungstag der Anmeldung: **18.08.1999**
(21) Anmeldenummer: 99101712.0
(22) Anmeldetag: 10.02.1999
(51) Int. Cl.: C02F 1/36

(54) **Verfahren zur mikrobiologischen Reinigung**

(30) Priorität: 13.02.1998 DE 19813451
(71) Anmelder: TUHH-Technologie GmbH, D-21079 Hamburg (DE)
(72) Erfinder: Tiehm, Andreas, Dr.rer.nat., 21423 Winsen (DE); Neis, Uwe, Prof. Dr.-Ing., 21345 Ashausen (DE)
(74) Vertreter: Patentanwälte Hauck, Graalfs, Wehnert, Döring, Siemons

(57) **Zusammenfassung**

Verfahren zur mikrobiologischen Reinigung von verunreinigten Flüssigkeiten, Suspensionen oder Feststoffen, insbesondere Abwasser, Prozeßwasser, Sickerwasser oder Suspensionen aus Bodenwäsche, mit Hilfe von Ultraschall mit einer Frequenz über 20 kHz. Mikroorganismen zum Um- oder Abbau der Verunreinigungen in der Flüssigkeit, der Suspension oder dem Feststoff befinden sich im beschallten Medium oder werden anschließend zugegeben.

## Beschreibung

Die Erfindung bezieht sich auf ein Verfahren zur mikrobiologischen Reinigung nach dem Oberbegriff von Anspruch 1 und Anspruch 4.

Mikrobiologische Reinigung, bei der Mikroorganismen einem zu reinigenden Substrat zugeführt werden, um dort Verunreinigungen um- oder abzubauen, ist bekannt und wird verbreitet zur Reinigung von Abwasser, Prozeßwasser, Sickerwasser oder Suspensionen aus Bodenwäsche eingesetzt. Dieses Verfahren hat zum Abbau organischer Schadstoffe einen breiten Anwendungsbereich gefunden, weil es in der Regel kostengünstiger ist als thermische oder chemisch-physikalische Verfahren.

Derartige mikrobiologische Prozesse werden zum einen durch langsamen Transport der Verunreinigung zu den Mikroorganismen limitiert. Weil im wesentlichen nur Substanzen, die in wäßrigem Medium gelöst sind, von den Mikroorganismen erreicht werden können, verlaufen die biologischen Reinigungsprozesse wegen der nötigen Lösungs- oder Desorptionsprozesse nur langsam oder sogar unvollständig. Das Reinigungsverfahren behindernde Prozeßparameter sind dabei die Adsorption der Verunreinigungen an Feststoffen oder deren Existenz als separate Phase in kristalliner Form oder als nicht wasserlösliche Flüssigkeit.

Zum anderen steht eine schwer angreifbare chemische Struktur, wie sie zum Beispiel bei starken Molekülverzweigungen oder hohem Molekulargewicht oder Halogensubstituenten im Molekül vorliegen kann, dem mikrobiologischen Prozeß entgegen. Weiterhin ist ein Transport der Substanzen durch diffuse Grenzschichten zu den Mikroorganismen nötig, was die mikrobiellen Umsatzprozesse ebenfalls beeinflußt.

Ein zum Beispiel aus der DE 43 36 218 C1 bekanntes Verfahren zur Verbesserung der Lösungs- oder Desorptionsprozesse ist der Zusatz von Lösungsvermittlern, zum Beispiel von Tensiden.

Die Verwendung von Ultraschall in der Abwassertechnologie ist zur Zerstörung unerwünschter Mikroorganismen bekannt (EP 0 567 225 A1, WO93/16958). Bei einer aus dem EP 0 655 417 A1 bekannten Vorrichtung wird mittels Ultraschall Klärschlamm aufgeschlossen, um dessen nachfolgenden Abbau zu verbessern. Bei diesem Verfahren kommt Ultraschall niedriger Frequenz zwischen 20 und 50 kHz zum Einsatz. In diesem Frequenzbereich werden Mikroorganismen gezielt zerstört.

Der vorliegenden Erfindung liegt demgegenüber die Aufgabe zugrunde, bei Reinigung von Flüssigkeiten, Suspensionen und/oder Feststoffen mikrobiologische Prozesse zu fördern.

Diese Aufgabe wird durch ein Verfahren zur mikrobiologischen Reinigung mit den in Anspruch 1 oder Anspruch 4 formulierten Merkmalen gelöst.

Mittels der vorliegenden Erfindung können sowohl sonophysikalische als auch sonochemische Effekte erzielt werden, die dafür sorgen, daß die verunreinigenden Substanzen bezüglich ihrer chemischen und/oder physikalischen Struktur derart verändert werden, daß sie durch die Mikroorganismen leichter angreifbar sind, und/oder die weiterhin dafür sorgen, daß ein Transfer der Substanzen zu den Mikroorganismen oder eine Durchmischung der Mikroorganismen mit den Substanzen zu deren verbesserter Angriffsmöglichkeit erreicht wird.

Die Ultraschallbehandlung bewirkt eine chemische Veränderung der Molekülstruktur zu besser angreifbaren Strukturen ohne weitere Zufuhr von Chemikalien. Darüber hinaus können die sonochemischen Reaktionsprodukte eine verbesserte Wasserlöslichkeit aufweisen. Erfindungsgemäß findet auch ein verbesserter Massentransfer in dem zu reinigenden Gut statt. Die Behandlung von Flüssigkeiten, Suspensionen und/oder Feststoffen mit Ultraschall bewirkt auch eine physikalische Trennung von Verunreinigungen und Trägerstoffen (sonophysikalischer Effekt). In beiden Fällen kann auf Zusätze von Lösungsvermittlern oder anderen Chemikalien verzichtet werden. Andererseits kann es nützlich sein, die Ultraschallbehandlung durch Zusatz von Lösungsvermittlern, durch UV-Bestrahlung oder durch Zugabe anderer Chemikalien zu unterstützen.

Die Ultraschallwellen unterstützen nicht nur die Transferbewegung und Durchmischung von Verunreinigungen und Mikroorganismen sondern bewirken Kavitationen, d.h. die Entstehung von Dampfblasen, deren Implosion berechnete Drücke von bis zu 500 atm und berechnete Temperaturen von bis zu 5000 K erzeugt. Diese Extrembedingungen erklären die forcierten Reaktionen des sonochemischen Effekts.

Mit dem erfindungsgemäßen Verfahren gibt es zwei Möglichkeiten, die zugrunde liegende Aufgabe zu erfüllen: Bei dem Verfahren zur mikrobiologischen Reinigung mit Hilfe von Ultraschall wird das verunreinigte Substrat entweder zunächst mit Ultraschall mit einer Frequenz über 20 kHz, vorzugsweise über 100 kHz und bis 1,6 MHz, vorzugsweise bis 1 MHz, behandelt, und es werden erst anschließend Mikroorganismen zum Abbau oder Umbau der Verunreinigungen in das zu reinigende Gut eingebracht, oder das Gut wird mit Ultraschall behandelt, während Mikroorganismen sich darin befinden, wobei der Ultraschall in diesem Fall eine Frequenz von 1 MHz oder mehr hat. Bei dieser hohen Frequenz tritt keine Schädigung der lebendigen Mikroorganismen ein, so daß die Ultraschallunterstützung des Reinigungsprozesses und der eigentliche mikrobielle Ab- und Umbau gleichzeitig ablaufen können. Durch gezielte Änderung der Frequenz in Richtung niedrigerer Werte läßt sich auch gezielt eine Reduktion der Biomassenproduktion erzielen. Dadurch läßt sich eine unerwünschte Vermehrung von Mikroorganismen begrenzen.

Das erfindungsgemäße Verfahren zur mikrobiologischen Reinigung wird insbesondere dazu verwendet, Verunreinigungen wie z.B. Kohlenwasserstoffe, PCB, Dioxine, Phenole, AOX, natürliche und/oder synthetische Polymere ab- und/oder umzubauen. Der Ultraschall wird dabei in Abhängigkeit von den Leistungsdaten und der Bauform des Ultraschallwandlers und der übrigen verwendeten Vorrichtungen mit aufeinander abgestimmter Leistungsdichte und Dauer auf das zu reinigende Gut angewendet.

Die Behandlung mit Ultraschall hat auch eine Erwärmung des Gutes zur Folge. Diese kann gezielt genutzt werden, um den mikrobiologischen Abbau zu fördern.

Das erfindungsgemäße Verfahren wird im folgenden anhand von zwei Beispielen beschrieben.

### Beispiel 1

Mit Bezug auf Fig. 1A ist erkennbar, daß bei einer Beschallung mit 1,6 MHz die Lösungsrate von kristallinem Phenanthren (PHE) in einer entsprechend verunreinigten Flüssigkeit gegenüber einer Flüssigkeit ohne Ultraschallbehandlung gesteigert wird (280 µgPHE/1 mit Ultraschall gegenüber 150 µgPHE/1 ohne Ultraschall). Dieser sonophysikalische Effekt zur Verbesserung des Massentransfers bewirkt mit Bezug auf Fig. 1B einen gesteigerten mikrobiellen Abbau des Phenanthrens, so daß im Anschluß an die mikrobielle Reinigung in der mit Ultraschall behandelten Flüssigkeit ein PHE-Rest von kleiner 40% verbleibt, während ohne Ultraschallbehandlung der PHE-Rest noch fast 60% beträgt.

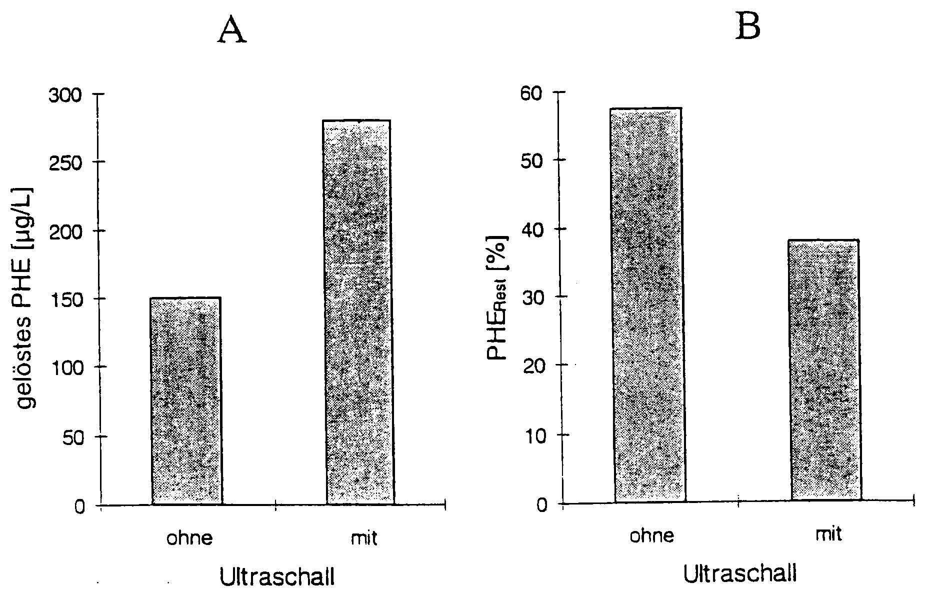

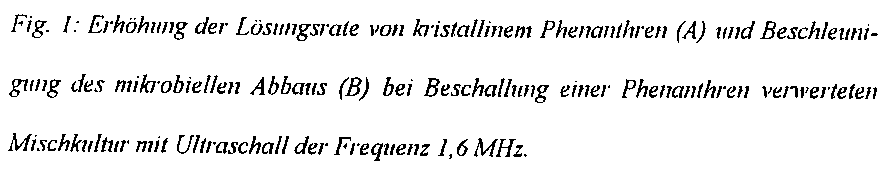

### Beispiel 2

Nach Beschallung einer mit kristallinem Naphthalin und Phenanthren verunreinigten Flüssigkeit mit Frequenzen von 351 kHz oder 1035 kHz kommt es gegenüber einer nicht mit Ultraschall behandelten Flüssigkeit zu einem schnelleren Massentransfer in die Wasserphase, wobei die sich im Wasser lösenden Substanzen chemische Reaktionsprodukte der beschallten polyzyklischen aromatischen Kohlenwasserstoffe sind. In diesem Sinne ist dieser Ablauf ein Beispiel für den sonochemischen Effekt der Ultraschallbehandlung.

Mit Bezug auf Fig. 2 bis 5 ist erkennbar, daß trotz des deutlich erhöhten spezifischen Absorptionskoeffizieten (SAK) die Konzentration an Naphthalin und Phenanthren nach Beschallung niedriger ist als im unbeschallten Referenzansatz. Dies zeigt, daß es sich bei den im Wasser gelösten Substanzen um Reaktionsprodukte der Kohlenwasserstoffe handelt. Mit Bezug auf Fig. 6 und 7 ist der gegenüber dem unbeschallten Referenzansatz erhöhte Massentransfer an organischer Substanz am Beispiel von Naphthalin verdeutlicht. Der entsprechend höhere gelöste organische Kohlenstoff (DOC, Fig. 7) und chemische Sauerstoffbedarf (CSB, Fig. 6) zeigen dies. Daß die gebildeten Reaktionsprodukte nicht toxisch wirken, ist mit Bezug auf Tabelle 1 erkennbar: Mit dem an der Proteinkonzentration erkennbaren Wachstum der Mikroorganismen geht ein mikrobieller Abbau des DOC und des CSB einher. Das erfindungsgemäße Verfahren ist daher zur gezielten Modifikation schwer abbaubarer Verbindungen mittels Ultraschall geeignet, die erfindungsgemäß anschließend mikrobiell abgebaut werden.

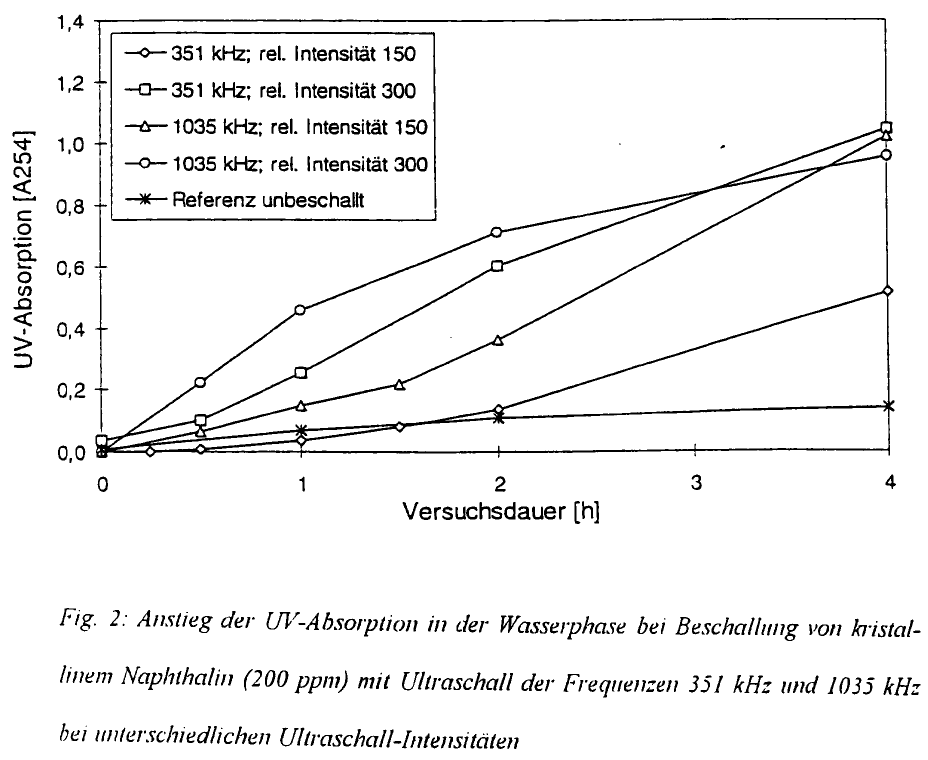

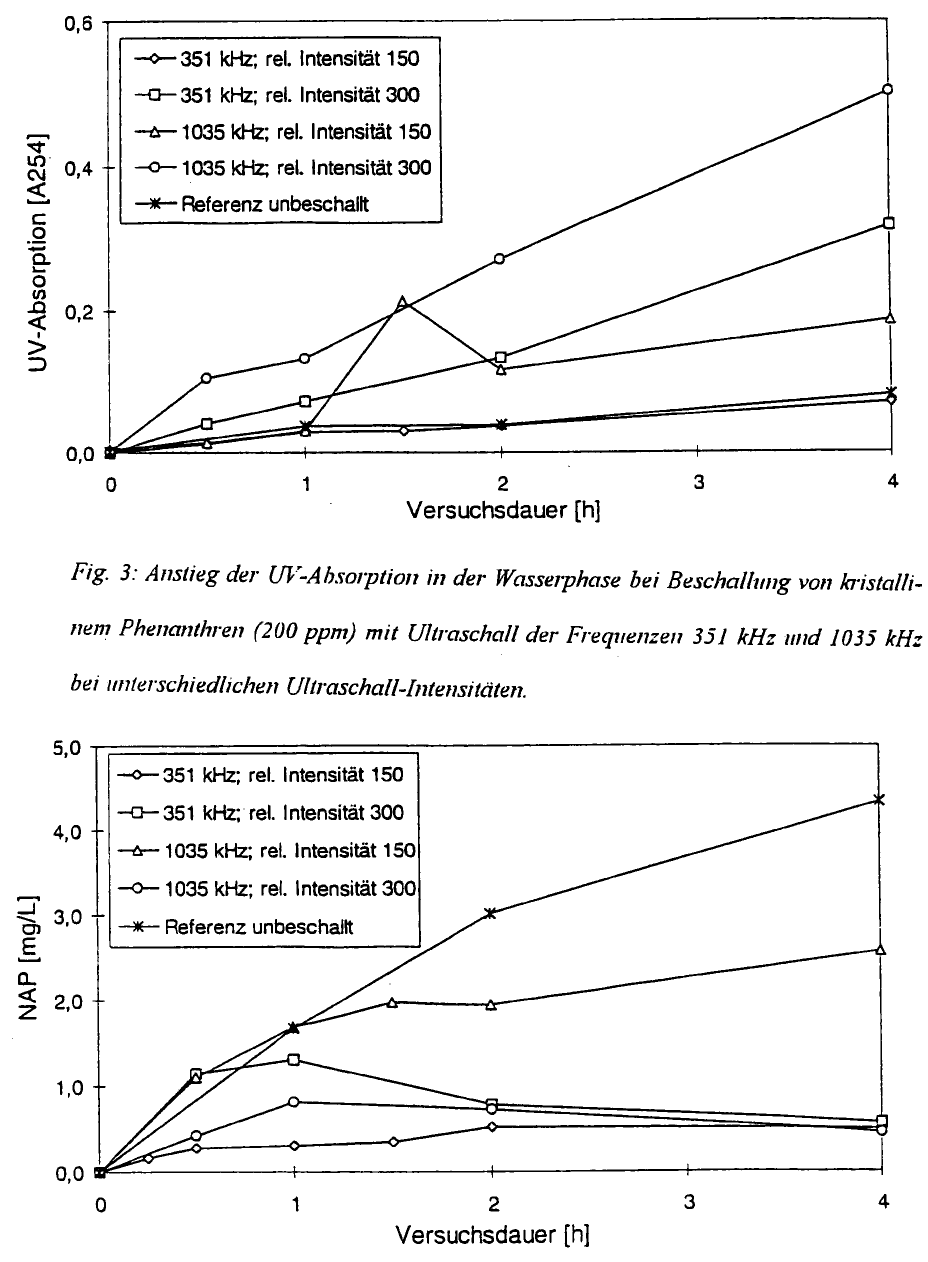

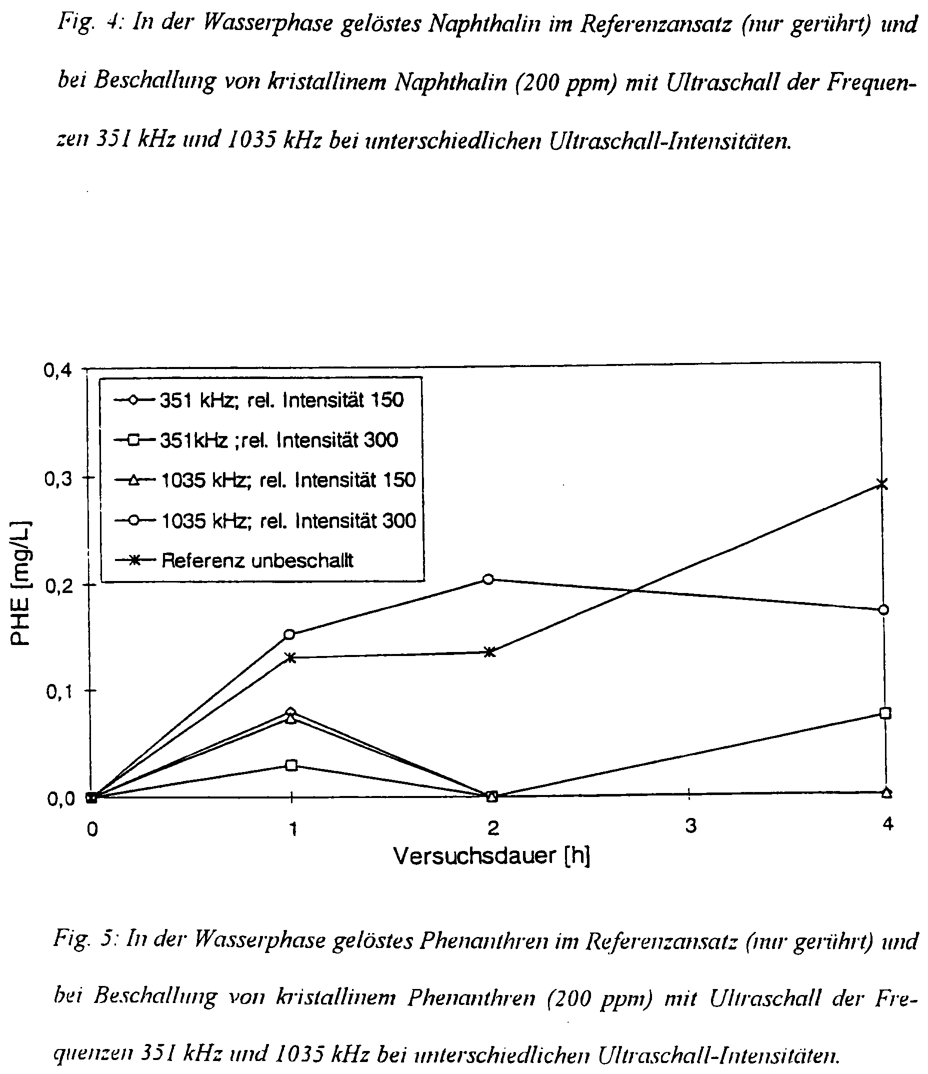

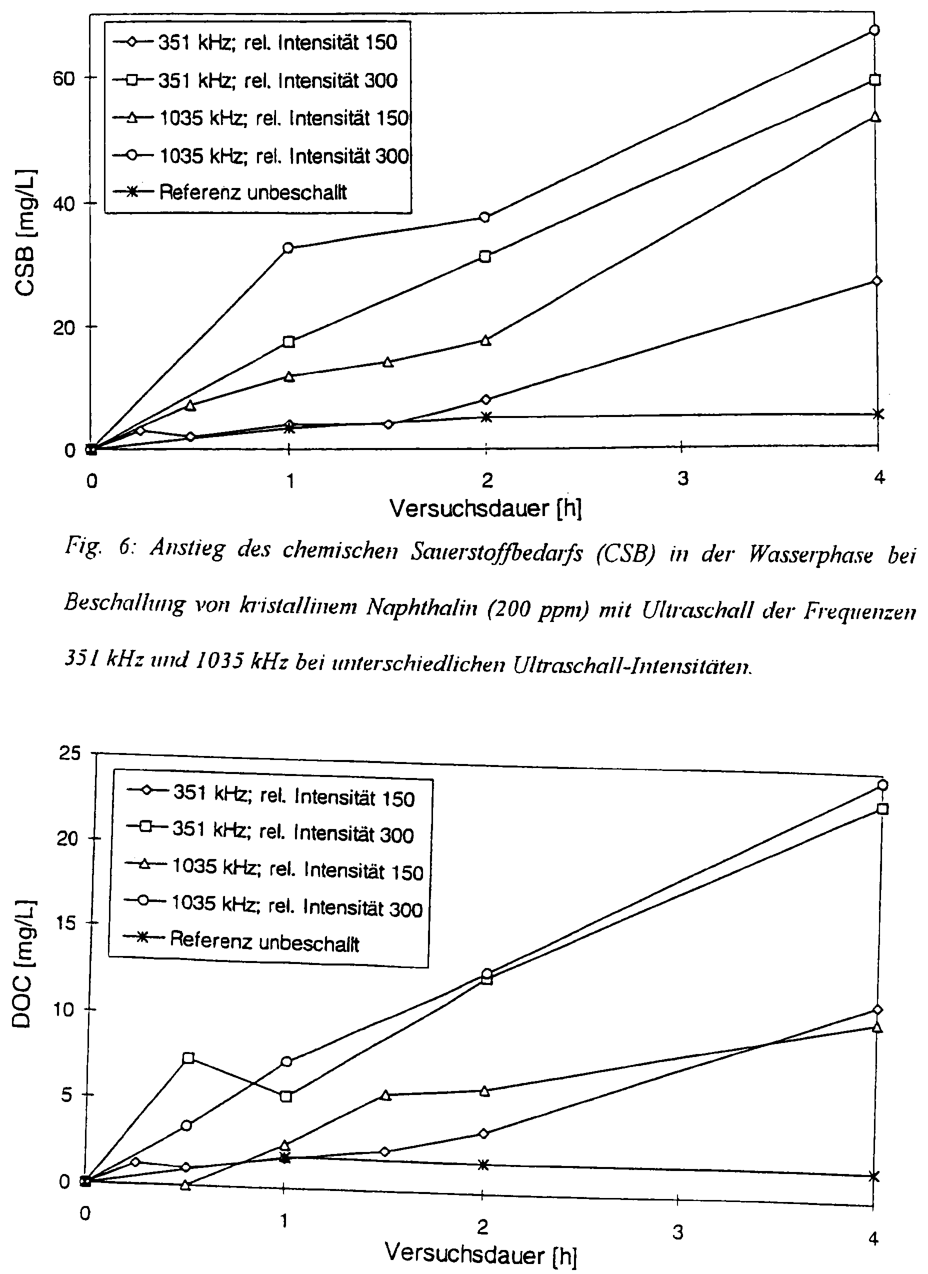

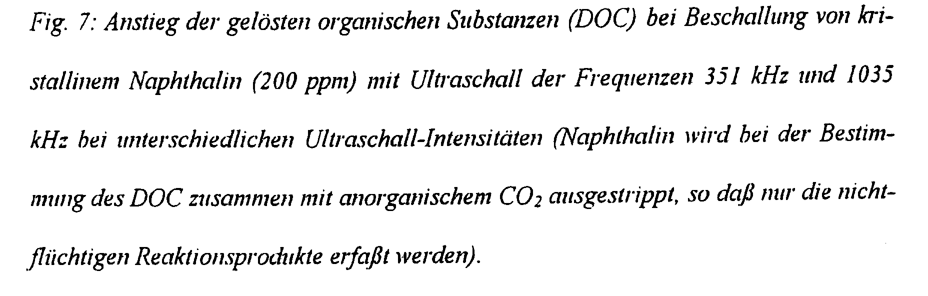

**Tabelle 1**

| *Mikrobieller Abbau von sonochemischem Reaktionsprodukten nach Beschallung von kristallinem Naphthalin (200 ppm) mit Ultraschall der Frequenzen 351 kHz und 1035 kHz bei unterschiedlichen Ultraschall-Intensitäten.* | | | | | | | | | |
|---|---|---|---|---|---|---|---|---|---|
| Ultraschall | | vor Inkubation | | | | nach 21 d Inkubation | | | |
| Frequenz | Intensität | SAK | CSB | DOC | Protein | SAK | CSB | DOC | Protein |
| [kHz] | [rel. E.] | [A254] | [mg/l] | [mg/l] | [mg/l] | [A254] | [mg/l] | [mg/l] | [mg/l] |
| 351 | 150 | 0,52 | 36,8 | 11,4 | n.n.^{a} | 0,37 | 30,6 | n.b.^{b} | 3,6 |
| 351 | 300 | 1,05 | 59,1 | 23,1 | n.n. | 0,90 | 51,6 | 16,6 | 4,9 |
| 1035 | 150 | 1,02 | 53,4 | 10,4 | n.n. | 0,62 | 36,8 | n.b. | 6,0 |
| 1035 | 300 | 0,96 | 67,0 | 24,5 | n.n. | 0,83 | 46,3 | 16,1 | 7,1 |

| | | | | | | | | | |
|---|---|---|---|---|---|---|---|---|---|
| ^{a}: n.n. = nicht nachweisbar | | | | | | | | | |
| ^{b}: n.b. = nicht bestimmt | | | | | | | | | |

Die Frequenz und Leistungsdichte des Ultraschalls hat wesentlichen Einfluß auf die Schädigung von Mikroorganismen. Während bei 1,6 MHz keine Schädigung der Mikroorganismen auftritt, überlebt bei 351 kHz oder 1035 kHz nur ein Teil der Mikroben. Dieser bleibt weiterhin für den Abbau oder Umbau der Verunreinigungen aktiv. Tabelle 2 zeigt dies in Abhängigkeit von Frequenz, Leistungsdichte und Dauer der Ultraschallbehandlung am Sauerstoffverbrauch der Biomasse als Indikator für deren Aktivität.

**Tabelle 2**

| *Einfluß der Ultraschallfrequenz, Ultraschalldichte und -dauer auf die Sauerstoffverbrauchsrate von Belebtschlamm beim Abbau von Acetat* | | | | |
|---|---|---|---|---|
| Frequenz | Leistungsdichte | Sauerstoffverbrauch [%] | | |
| [kHz]. | [W/L] | Dauer Ultraschallbehandlung | | |
| | | 0 h | 2 h | 4 h |
| 351^{a} | 150^{b} | 100 | 70 | 40 |
| 351^{a} | 300^{b} | 100 | 38 | 26 |
| 1035^{a} | 150^{b} | 100 | 105 | 45 |
| 1035^{a} | 300^{b} | 100 | n.b. ^{d} | 24 |
| 1600^{c} | n.b. | 100 | n.b. | 101 |

| | | | | |
|---|---|---|---|---|
| ^{a}: Ultraschall System: 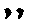 USW51-52", Allied Signal | | | | |
| ^{b}: bezogen auf den Energieverbrauch des Ultraschallwandlers | | | | |
| ^{c}: Ultraschall System: 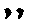 Megasonic", Heinemann Labortechnik | | | | |
| ^{d}: n.b. = nicht bestimmt | | | | |

## Patentansprüche

1. Verfahren zur mikrobiologischen Reinigung von verunreinigten Flüssigkeiten, Suspensionen oder Feststoffen, insbesondere Abwasser, Prozeßwasser, Sickerwasser oder Suspensionen aus Bodenwäsche, dadurch gekennzeichnet, daß zunächst die Flüssigkeit, die Suspension oder der Feststoff mit Ultraschall mit einer Frequenz über 20 kHz behandelt wird und anschließend Mikroorganismen zum Um- oder Abbau der Verunreinigungen in die Flüssigkeit, die Suspension oder den Feststoff eingebracht werden.

2. Verfahren nach Anspruch 1, dadurch gekennzeichnet, daß die Flüssigkeit, die Suspension oder der Feststoff mit Ultraschall mit einer Frequenz über 100 kHz behandelt wird.

3. Verfahren nach Anspruch 1 oder 2, dadurch gekennzeichnet, daß die Flüssigkeit, die Suspension oder der Feststoff mit Ultraschall mit einer Frequenz bis 1,6 MHz, vorzugsweise bis 1 MHz behandelt wird.

4. Verfahren zur mikrobiologischen Reinigung von verunreinigten Flüssigkeiten, Suspensionen oder Feststoffen, insbesondere Abwasser, Prozeßwasser, Sickerwasser oder Suspensionen aus Bodenwäsche, mit Hilfe von Ultraschall, dadurch gekennzeichnet, daß die Flüssigkeit, die Suspension oder der Feststoff mit Ultraschall mit einer Frequenz von 1 MHz oder größer behandelt wird, während Mikroorganismen zum Um- oder Abbau der Verunreinigungen sich in der Flüssigkeit, der Suspension oder dem Feststoffbefinden.

5. Verfahren nach einem der Ansprüche 1 bis 4, gekennzeichnet durch die Anwendung auf Flüssigkeiten, Suspensionen oder Feststoffe, bei denen die Verunreinigungen Kohlenwasserstoffe, PCB, Dioxine, Phenole, AOX, natürliche und/oder synthetische Polymere sind.

6. Verfahren nach einem der Ansprüche 1 bis 5, dadurch gekennzeichnet, daß die Ultraschallbehandlung durch zusätzliche UV-Bestrahlung oder eine Temperatur-Erhöhung unterstützt wird.

7. Verfahren nach einem der Ansprüche 1 bis 6, dadurch gekennzeichnet, daß die chemisch modifizierende Wirkung der Ultraschallbehandlung auf schwer abbaubare Verbindungen durch Zugabe von Chemikalien unterstützt wird.

8. Verfahren nach einem der Ansprüche 1 bis 7, dadurch gekennzeichnet, däß die lösungsfördernde Wirkung der Ultraschallbehandlung auf adsorbierte, noch nicht gelöste Verunreinigungen durch Zugabe von Lösungsvermittlern, z.B. von Tensiden oder Polyphosphaten unterstützt wird.

9. Verfahren nach Anspruch 8, dadurch gekennzeichnet, daß zusätzlich eine Temperatur-Erhöhung vorgenommen wird.
